# DEMANDE DE BREVET EUROPEEN

(11) **EP 4 717 903 A1**
(43) Date de publication de la demande: **01.04.2026**
(21) Numéro de dépôt: 25205383.0
(22) Date de dépôt: 29.09.2025
(51) Int. Cl.: F02K 9/97, F02K 1/82

(54) **TUYÈRE D'ÉCHAPPEMENT D'UN MOTEUR POUR UN LANCEUR SPATIAL ÉQUIPÉ D'UN SYSTÈME DE REFROIDISSEMENT**

(30) Priorité: 30.09.2024 FR 2410487
(71) Demandeur: Latitude, 51100 Reims (FR)
(72) Inventeur: COLLET, Alexis, 51100 REIMS (FR); DILEM, Yvan, 51100 REIMS (FR)
(74) Mandataire: IP Trust

(57) **Abrégé**

L'invention porte sur une tuyère d'échappement (1) d'un moteur pour lanceur spatial équipé d'un système de refroidissement, s'étendant selon une direction longitudinale (D) et présentant une extrémité proximale destinée à être reliée à une chambre de combustion et une extrémité distale (10),
le système de refroidissement comprenant un collecteur inférieur (20) disposé à l'extrémité distale et le long de la périphérie de la tuyère et des canaux (30) s'étendant selon la direction longitudinale communiquant avec le collecteur inférieur,
caractérisée en ce que la section transversale du collecteur inférieure est dégressive selon au moins une dimension le long du parcours du collecteur.

## Description

La présente invention concerne un système de refroidissement d'une tuyère d'échappement d'un moteur pour lanceur spatial.

### ETAT DE LA TECHNIQUE

On connaît des tuyères d'échappement d'un moteur pour lanceur spatial ayant un système de refroidissement du corps de la tuyère comprenant :
- un collecteur de liquide de refroidissement disposé au niveau du l'embouchure de la tuyère et présentant la forme d'un anneau,
- des canaux de liquide de refroidissement alimentés par ledit collecteur, les canaux étant répartis dans le corps de la tuyère, s'étendant selon la direction longitudinale et sensiblement parallèlement entre eux.

Bien que satisfaisant, il est désireux de proposer un autre mode de réalisation afin d'encore améliorer les performances d'une tuyère d'échappement ou d'un moteur de lanceur spatial équipé de ladite tuyère d'échappement.

### OBJET DE L'INVENTION

A cet effet, et selon un premier aspect, l'invention propose une tuyère d'échappement d'un moteur pour lanceur spatial équipé d'un système de refroidissement, s'étendant selon une direction longitudinale et présentant une extrémité proximale destinée à être reliée à une chambre de combustion et une extrémité distale, opposée à l'extrémité proximale, en particulier correspondant à l'orifice de sortie des gaz d'échappement,
le système de refroidissement comprenant un collecteur inférieur disposé à l'extrémité distale et le long de la périphérie de la tuyère et des canaux s'étendant selon la direction longitudinale communiquant avec le collecteur inférieur,
caractérisée en ce que la section transversale du collecteur inférieure est dégressive selon au moins une dimension le long du parcours du collecteur.

Ainsi, le collecteur de refroidissement selon l'invention permet de répartir de manière égale le débit massique total dans chaque canal de refroidissement, et de limiter les chutes de pression. Une bonne répartition du débit massique permet de refroidir le moteur et d'éviter une panne catastrophique.

Selon différents modes ou variantes de réalisations pouvant, ou non, être combinables eux, la tuyère d'échappement ou le collecteur comprend ou présente les caractéristiques suivantes :
- le collecteur de refroidissement peut présenter une ou plusieurs parties ;
- le collecteur ou l'au moins une partie du collecteur de refroidissement s'étend selon la direction périphérique ou circonférentielle ou tangentielle du corps de la tuyère ;
- de préférence, le collecteur présente deux parties reliées entre elles, de préférence uniquement, par le dispositif d'alimentation en fluide de refroidissement à l'entrée du collecteur;
- de préférence, le collecteur présente une forme de couronne, ou en arc de cercle ;
- selon un mode de réalisation, la section transversale du collecteur peut présenter une forme générale de quadrilatère présentant quatre dimensions de longueur ou triangulaire présentant trois dimensions de longueur ;
- selon un autre mode de réalisation, la section transversale du collecteur peut présenter une forme générale triangulaire présentant trois dimensions de longueur ;
- en outre, la section transversale du collecteur peut présenter une forme de quadrilatère ou triangulaire présentant au moins deux dimensions angulaires ;
- de préférence, la largeur et/ou la hauteur, ou l'aire de la section transversale est dégressive ou décroissante le long du parcours du collecteur, en particulier depuis l'orifice d'entrée du collecteur vers de préférence l'extrémité diamétralement opposée ;
- selon un mode de réalisation, au moins un canal présente un orifice d'entrée de section transversale réduite par rapport à orifice d'entrée d'un canal voisin, de préférence au moins un canal situé à l'opposé de l'entrée du collecteur ;
- de préférence le collecteur est symétrique selon un plan passant par l'axe de la tuyère, en particulier l'axe étant sensiblement parallèle à la direction longitudinale ;
- selon un mode de réalisation la section du collecteur peut présenter la forme générale d'un triangle dont les sommets présentent des congés ou des chanfreins.

En particulier, le fluide ou liquide de refroidissement est un carburant pour ledit moteur.

Selon un autre aspect, l'invention propose un collecteur de refroidissement pour tuyère d'échappement d'un moteur pour lanceur spatial pouvant comprendre une ou plusieurs des caractéristiques du premier aspect.

Selon un autre aspect, l'invention propose un moteur pour lanceur spatial pouvant comprendre une tuyère d'échappement selon l'une ou plusieurs des caractéristiques du premier aspect.

Selon encore un autre aspect, l'invention propose un procédé de fabrication d'une tuyère d'échappement d'un moteur pour lanceur spatial équipé d'un système de refroidissement selon l'une ou plusieurs des caractéristiques du premier aspect, dans lequel il est utilisé au moins un procédé de fabrication additive 3D.

### BREVE DESCRIPTION DES FIGURES

D'autres caractéristiques et avantages de l'invention ressortiront de la description détaillée de l'invention qui va suivre en référence aux figures annexées et dans lesquelles :
[Fig. 1] La figure 1 est une vue perspective d'une extrémité distale du corps d'une tuyère d'échappement de moteur pour lanceur spatial selon un mode de réalisation comprenant un collecteur de refroidissement en forme de couronne, un tuyau en forme de Y permettant le raccordement au dispositif d'alimentation au collecteur et des canaux s'étendant sensiblement verticalement, une portion des canaux étant visible ;
[Fig. 2] La figure 2 est une vue d'une section transversale d'un collecteur de refroidissement ;
[Fig. 3] La figure 3 est un agrandissement de la section transversale d'un collecteur conforme à la figure 2 ;
[Fig. 4] La figure 4 est un schéma d'un profil du parcours d'une partie d'un collecteur selon un mode de réalisation ;
[Fig. 5] La figure 5 est une vue de côté d'une extrémité distale du corps d'une tuyère d'échappement de moteur pour lanceur spatial selon un autre mode de réalisation.

Pour plus de clarté, les éléments identiques ou similaires des différents modes de réalisation sont repérés par des signes de référence identiques sur l'ensemble des figures.

### DESCRIPTION DETAILLEE DE L'INVENTION

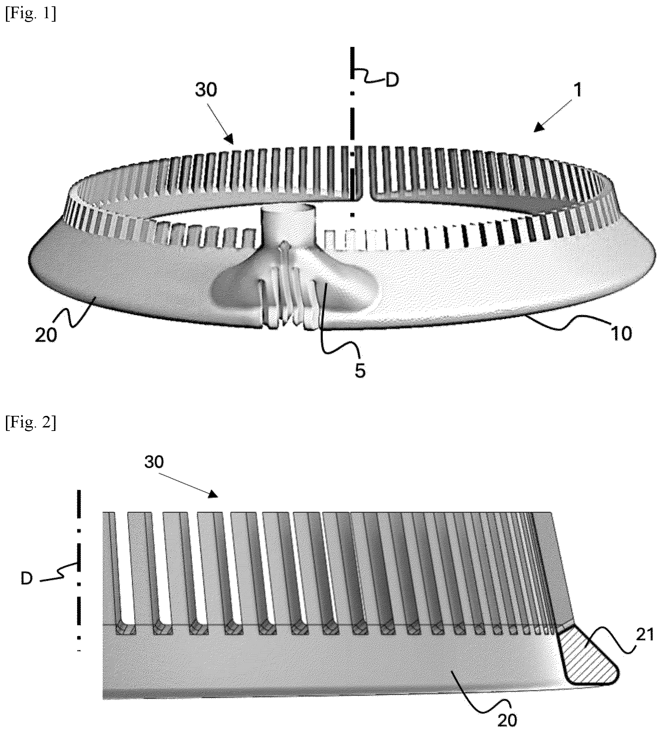

En relation avec la figure 1, il est décrit un mode de réalisation d'un collecteur de refroidissement 20 d'une tuyère d'échappement 1 d'un moteur pour lanceur spatial équipé d'un système de refroidissement. La tuyère 1 s'étend selon une direction longitudinale D et présente une extrémité distale 10 où se situe le collecteur de refroidissement 20.

Le collecteur inférieur 20 s'étend en outre le long de la périphérie de la tuyère et des canaux 30 s'étendant selon la direction longitudinale communiquant avec le collecteur inférieur 20. Le collecteur de refroidissement 20 est alimenté en carburant par un dispositif d'alimentation non représenté via un raccord 5 en forme de Y.

Le collecteur de refroidissement présente la forme générale d'une couronne, vue d'en haut, cette couronne étant non fermée de manière à présente deux parties en arc de cercle, de préférence symétrique selon un plan vertical passant par l'axe de la tuyère formant deux arc de cercle de 180 degrés angulaires.

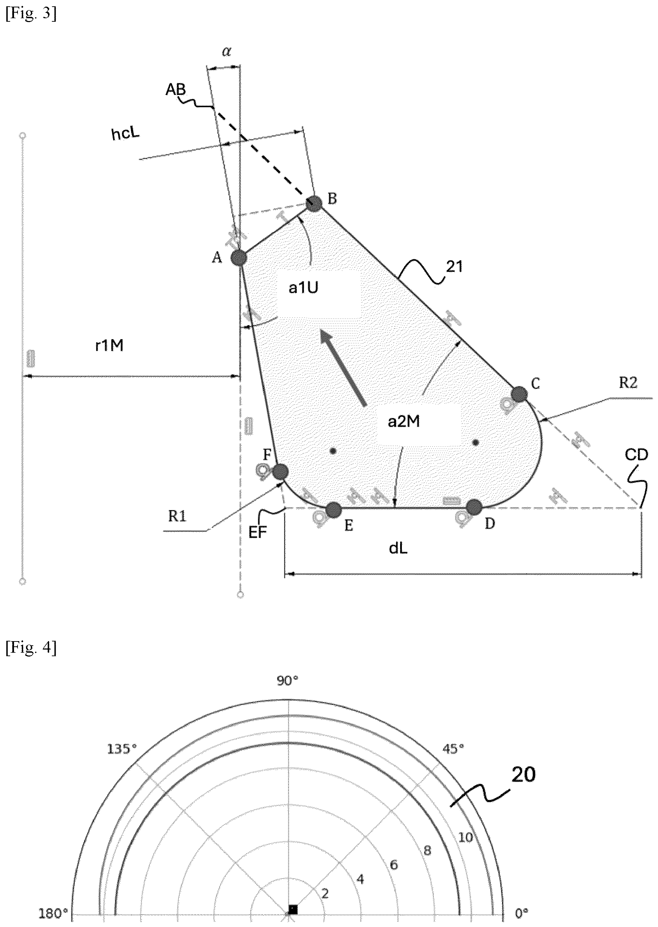

En référence aux figures 1 et 4, les deux parties présentent chacune un parcours dont la section transversale du collecteur inférieure est dégressive ou décroissante selon au moins une dimension le long du parcours du collecteur.

En référence à la figure 1, la hauteur du collecteur est dégressive ou décroissante le long du parcours du collecteur, en particulier depuis l'orifice d'entrée dudit collecteur vers l'extrémité diamétralement opposée à l'orifice d'entrée.

En référence à la figure 4, la largeur du collecteur est dégressive ou décroissante le long du parcours du collecteur, en particulier depuis l'orifice d'entrée dudit collecteur, positionné au point 0°, vers l'extrémité d'une des parties du collecteur diamétralement opposée à l'orifice d'entrée, positionné au point 180°.

De préférence au regard des figures 2 et 3, la section transversale 21 du collecteur présente la forme générale d'un triangle dont les sommets présentent des congés ou des chanfreins. Par exemple en référence à la figure 3, la section transversale 21 du collecteur présente la forme d'un triangle présentant les sommets AB, CD et EF. Le sommet AB présente un chanfrein de manière à présenter un côté délimité par les points A et B. Le sommet CD présente un congé R2 délimité par les points C et D. Le sommet EF présente un congé R1 délimité par les points E et F.

Ainsi le long du parcours du collecteur, les dimensions de la section transversale du collecteur peuvent varier, à savoir les longueurs dL et/ou hcL et/ou les angles a1U et/ou a2M. En outre, selon le diamètre r1M de la tuyère, ces dimensions peuvent varier.

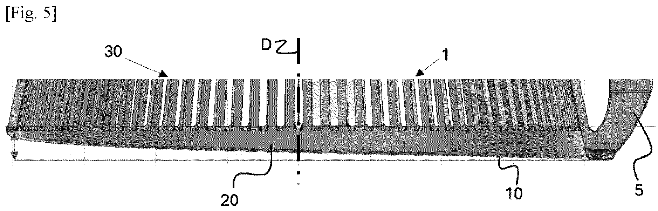

En outre, selon une variante de réalisation en référence à la figure 5, la dimension variable de hauteur du collecteur peut être pris à partir d'un plan de référence comprenant l'ensemble des orifices d'entrée des canaux.

## Revendications

1. Tuyère d'échappement (1) d'un moteur pour lanceur spatial équipé d'un système de refroidissement, s'étendant selon une direction longitudinale (D) et présentant une extrémité proximale destinée à être reliée à une chambre de combustion et une extrémité distale (10),
le système de refroidissement comprenant un collecteur inférieur (20) disposé à l'extrémité distale et le long de la périphérie de la tuyère et des canaux (30) s'étendant selon la direction longitudinale communiquant avec le collecteur inférieur, **caractérisée en ce que** la section transversale du collecteur inférieure est dégressive selon au moins une dimension le long du parcours du collecteur.

2. Tuyère selon la revendication précédente dans laquelle la section transversale (21) du collecteur présente une forme de quadrilatère présentant quatre dimensions de longueur ou triangulaire présentant trois dimensions de longueur.

3. Tuyère selon la revendication 1 ou 2 dans laquelle la section transversale du collecteur présente une forme de quadrilatère ou triangulaire présentant au moins deux dimensions angulaires.

4. Tuyère selon l'une des revendications précédentes, dans laquelle au moins un canal présente un orifice d'entrée de section transversale réduite par rapport à orifice d'entrée d'un canal voisin, de préférence au moins un canal situé à l'opposé de l'entrée du collecteur.

5. Tuyère selon l'une des revendications précédentes, dans laquelle le collecteur (20) est symétrique selon un plan passant par l'axe de la tuyère.

6. Tuyère selon l'une des revendications précédentes, dans laquelle la section du collecteur présente la forme générale d'un triangle dont les sommets présentent des congés ou des chanfreins.

7. Moteur pour lanceur spatial comprenant une tuyère d'échappement selon l'une des revendications précédentes.

8. Procédé de fabrication d'une tuyère d'échappement d'un moteur pour lanceur spatial équipé d'un système de refroidissement selon l'une des revendications 1 à 6 dans lequel il est utilisé au moins un procédé de fabrication additive 3D.
